# EUROPEAN PATENT APPLICATION

(11) **EP 4 848 380 A1**
(43) Date of publication of application: **02.12.2026**
(21) Application number: 24919807.8
(22) Date of filing: 17.10.2024
(51) Int. Cl.: H01M 4/64, H01M 4/66, C25D 7/00

(54) **COMPOSITE CURRENT COLLECTOR AND PREPARATION METHOD THEREFOR, ELECTRODE SHEET, SECONDARY BATTERY AND ELECTRIC DEVICE**

(30) Priority: 26.01.2024 CN 202410116158
(71) Applicant: Contemporary Amperex Technology Co., Limited, Ningde, Fujian 352100 (CN)
(72) Inventor: ZHANG, Shengwu, Ningde, Fujian 352100 (CN); LI, Diwu, Ningde, Fujian 352100 (CN); ZHENG, Tuo, Ningde, Fujian 352100 (CN); LI, Shisong, Ningde, Fujian 352100 (CN)
(74) Representative: Gong, Jinping
(86) International application number: PCT/CN2024/125500
(87) International publication number: WO 2025/156727

(57) **Abstract**

A composite current collector (6) and a preparation method therefor, an electrode sheet, a secondary battery (5) and an electrical device are provided. The composite current collector includes a current collector substrate (61) and a current collector metal oxide film (62) disposed on at least one side of the current collector substrate. The metal oxide film has a thickness (L1) of 0.5 µm to 2 µm. The composite current collector has high sheet resistance, so that the safety performance of the battery can be improved.

## Description

### CROSS REFERENCE

The present application makes reference to Chinese Patent Application No. 202410116158.9 filed on January 26, 2024 and entitled "Composite Current Collector and Preparation Method Therefor, Electrode Sheet, Secondary Battery and Electrical Device", which is incorporated herein by reference in its entirety.

### TECHNICAL FIELD

The present application relates to the technical field of batteries, and in particular, to a composite current collector and a preparation method therefor, an electrode sheet, a secondary battery and an electrical device.

### BACKGROUND

In recent years, secondary batteries have been widely applied in energy storage power systems such as hydraulic, thermal, wind, and solar power plants, as well as in various fields of power tools, electric bicycles, electric motorcycles, electric vehicles, military equipment, aerospace, and so on.

However, the safety of secondary batteries limits application and popularity thereof. How to further improve the safety performance of secondary batteries is a technical problem that needs to be resolved urgently in the art.

### SUMMARY

An objective of the present application is to provide a composite current collector capable of improving the safety performance of a secondary battery.

A first aspect of the present application provides a composite current collector, including a current collector substrate and a metal oxide film disposed on at least one side of the current collector substrate, where the metal oxide film has a thickness of 0.5 µm to 2 µm.

The method of depositing a metal oxide film with a certain thickness on at least one side of the current collector substrate effectively controls the sheet resistance of the composite current collector within a certain range, thereby improving the short circuit resistance when a short circuit occurs in the battery under abnormal conditions, greatly reducing the short circuit current, reducing the heat released due to the short circuit in the battery, reducing the risk of thermal runaway, and greatly improving the safety performance of the battery. Compared with the current collector in the prior art, the composite current collector structure has a high tolerance for the ranger of thickness of the metal conductive layer therein, such that the current collector substrate with poor precision and large deviation of sheet resistance can also be applied to manufacturing of batteries, which greatly reduces the threshold of the current collector substrate that may be used in batteries, and significantly reduces the production cost of the batteries.

In any embodiment, the metal conductive layer may have a thickness of 0.8 µm to 2 µm, or even greater.

In any embodiment, a range of the thickness of the metal oxide film is less than or equal to 400 nm.

The metal oxide film provided in the embodiments of the present application has good film thickness uniformity, which is beneficial to improving the uniformity and consistency of the composite current collector and improving electrochemical performance thereof in the battery.

In any embodiment, the current collector substrate includes a support layer and metal conductive layers disposed on two opposite surfaces of the support layer.

In any embodiment, the current collector substrate includes a metal conductive layer and a support layer, the support layer includes an insulating layer, and the metal conductive layers are disposed on two opposite surfaces of the insulating layer.

In any embodiment, the current collector substrate includes a metal conductive layer and a support layer, the support layer includes a metal layer or an alloy layer, and the metal conductive layers are disposed on two opposite surfaces of the metal layer or the alloy layer.

When the battery is short-circuited under abnormal circumstances, the insulating layer will fuse to block current conduction, such that the short circuit current is greatly reduced, the temperature rise is small, and finally the risks of cell burning and thermal runaway are reduced, and the safety performance of the battery is greatly improved. Meanwhile, the insulating layer is beneficial to the improvement of the elongation at break of the composite current collector, and may compensate for the negative impact of the metal oxide film on the processability of the composite current collector, thereby meeting the requirements of the battery on the processing performance of the current collector. The metal conductive layer has a conductive property and is configured to provide electrons for an electrode active material layer loaded on the composite current collector, thereby playing a role of conducting and collecting currents.

In any embodiment, the metal conductive layer includes at least one of aluminum, copper, titanium, silver, nickel, an aluminum alloy, a nickel alloy, a titanium alloy, and a silver alloy.

In any embodiment, the metal conductive layer includes a composite material of any one of a metal or an alloy and a two-dimensional material; the two-dimensional material includes at least one of a graphene material, a graphene-like material, or a carbon fiber material.

In any embodiment, the thickness of the metal conductive layer is 0.8 µm to 2 µm.

The metal conductive layer has a conductive property and is configured to provide electrons for an electrode active material layer loaded on the composite current collector, thereby playing a role of conducting and collecting currents. In the prior art, the sheet resistance of the current collector is usually increased by controlling the thickness of the metal conductive layer, and as the sheet resistance increases, the metal conductive layer needs to be thinned to a certain extent. In the embodiments of the present application, the sheet resistance of the composite current collector is adjusted by the metal oxide film, such that the composite current collector may tolerate a higher thickness of the metal conductive layer, a formation path of the metal conductive layer is widened, and the manufacturing cost of the composite current collector is reduced, thereby effectively achieving a significant reduction in the cost of the battery.

In any embodiment, the range of the thickness of the metal conductive layer is less than or equal to 0.6 µm.

The composite current collector provided in the embodiments of the present application is different from the current collector in the prior art, and can be compatible with a metal conductive layer having a large thickness deviation, which greatly expands the production method of the metal conductive layer, such that the manufacturing cost of the composite current collector is significantly reduced, thereby reducing the cost of the battery.

In any embodiment, the insulating layer includes a polymer.

In any embodiment, the metal oxide film includes aluminum oxide or copper oxide.

The aluminum oxide film is non-conductive, and has high chemical stability and thermal stability, which may stably improve the sheet resistance of the composite current collector within the cycle life of the battery, and improve the safety performance of the battery.

In any embodiment, under a normal temperature condition, sheet resistance of the composite current collector on one side of the metal oxide film is 25 m Ω/□ to 35 mΩ/□.

The composite current collector having the above sheet resistance can improve the short circuit resistance of the battery when a short circuit occurs under abnormal circumstances, greatly reduce the short circuit current, reduce the heat released due to the internal short circuit of the battery, reduce the risk of thermal runaway, and greatly improve the safety performance of the battery.

A second aspect of the present application provides a preparation method for a composite current collector, including: providing a current collector substrate; and preparing a metal oxide film on at least one side of the current collector substrate by an anodic oxidation method to obtain a composite current collector, where the metal oxide film has a thickness of 0.5 µm to 2 µm.

By adopting an anodic oxidation method, a current collector substrate is used as an anode, and a metal oxide film with a certain thickness is generated on a surface of the current collector substrate through an electrochemical reaction to obtain a composite current collector, and the composite current collector has certain sheet resistance, such that when a short circuit occurs inside the battery under abnormal circumstances, the short circuit current is greatly reduced, heat released due to the short circuit is reduced, the risk of thermal runaway is reduced, and the safety performance of the battery is greatly improved. Compared with the current collector in the prior art, the composite current collector enables the current collector substrate with poor precision and large deviation of sheet resistance to be applied to manufacturing of the batteries, which greatly reduces the threshold of the current collector substrate that may be used in the battery, and significantly reduces the production cost of the battery. Moreover, the oxide film generated by the anodic oxidation method has a high degree of compactness and good thickness uniformity, which is beneficial to improving the uniformity and consistency of the composite current collector.

In any embodiment, a range of the thickness of the metal oxide film is less than or equal to 400 nm.

In any embodiment, an electrolyte in the anodic oxidation method is an acidic electrolyte, the acidic electrolyte includes at least one of sulfuric acid, hypochlorous acid, and hypochlorite, and a mass percentage concentration of the acidic electrolyte is 10% to 40%.

When the concentration of the acidic electrolyte is within the above range, it is beneficial to generating the metal oxide film on the surface of the current collector substrate, which can not only improve the preparation efficiency of the metal oxide film, but also avoid the rapid decomposition of the metal oxide film due to the too high concentration of the acidic electrolyte, thereby achieving the stable and efficient preparation of the metal oxide film.

In any implementation, a temperature of the electrolyte is 0°C to 40°C.

When the temperature of the electrolyte is within the above range, acid corrosion is less likely to occur, and the electrochemical reaction efficiency of anodic oxidation can be improved, such that a metal oxide film may be stably and efficiently prepared.

In any embodiment, a voltage in the anodic oxidation method is 5V to 25V.

When the voltage of the anodic oxidation is within the above range, the surface of the current collector substrate is not ablated due to an excessively high oxidation voltage, and the oxide film is not generated due to an excessively low oxidation voltage, thereby achieving stable and efficient deposition of the metal oxide film.

In any embodiment, the preparation method is a continuous production method.

The preparation efficiency of the composite current collector is improved by the above method, which is beneficial to industrial popularization and application.

In any embodiment, under a normal temperature condition, sheet resistance of the composite current collector on one side of the metal oxide film is 25 m Ω/□ to 35 mΩ/□.

The composite current collector with certain sheet resistance may greatly reduce the short circuit current when the battery is short-circuited inside under abnormal circumstances, reduce the heat released due to the short circuit, reduce the risk of thermal runaway, and greatly improve the safety performance of the battery.

A third aspect of the present application provides an electrode sheet, where the electrode sheet includes a current collector, including the composite current collector in the first aspect or the composite current collector prepared by the preparation method in the second aspect.

A fourth aspect of the present application provides a secondary battery, including the electrode sheet in the third aspect.

A fifth aspect of the present application provides an electrical device, including the secondary battery according to the fourth aspect.

### BRIEF DESCRIPTION OF THE DRAWINGS

In order to more clearly illustrate the technical solutions in the embodiments of the present application, drawings required to be used in the embodiments of the present application are briefly described below. It is clear that the drawings described below show only some embodiments of the present application, and those skilled in the art may further derive other drawings from the drawings without creative effort.
FIG. 1 is a schematic view of a cross section of a composite current collector according to an embodiment of the present application.
FIG. 2 is a schematic view of a cross section of a composite current collector according to an embodiment of the present application.
FIG. 3 is a scanning electron microscope image of a surface of a composite current collector according to an embodiment of the present application.
FIG. 4 (a) is a scanning electron microscope image of a cross section of a composite current collector according to an embodiment of the present application. FIG. 4 (b) is a scanning electron microscope image of a cross section of a current collector according to the prior art.
FIG. 5 is a schematic view of an electroplating device according to an embodiment of the present application.
FIG. 6 is a schematic view of an embodiment of a secondary battery according to the present application.
FIG. 7 is a schematic exploded view of an embodiment of a secondary battery according to the present application.
FIG. 8 is a schematic view of an embodiment of a battery module according to the present application.
FIG. 9 is a schematic view of an embodiment of a battery pack according to the present application.
FIG. 10 is a schematic exploded view of the embodiment of the battery pack shown in FIG. 9.
FIG. 11 is a schematic view of an embodiment of an electrical device including a secondary battery according to the present application as a power supply.

The figures are not necessarily drawn to the actual scale. Description of reference numerals:
1, battery pack; 2 upper case body; 3 lower case body; 4, battery module; 5, secondary battery; 51, housing; 52, electrode assembly; 53, cover plate; 6, composite current collector; 61, current collector substrate; 62, metal oxide film; 611, metal conductive layer; 612, support layer; 7, electroplating device; 71, conductive roller; 72, external power supply; 73, electrolytic cell; 74, passing roller; 75, cathode plate; 76, electrolyte; L1, thickness of metal oxide film; L2, thickness of metal conductive layer; L3, thickness of insulating layer.

### DETAILED DESCRIPTION OF PREFERRED EMBODIMENTS

Hereinafter, embodiments where a composite current collector and a preparation method therefor, an electrode sheet including the same, a secondary battery, and an electrical device in the present application are specifically disclosed are described in detail appropriately with reference to the drawings. However, an unnecessary detailed description may be omitted. For example, a detailed description of well-known matters and repeated descriptions of a substantially same structure may be omitted. This is to avoid the following descriptions from becoming unnecessarily redundant and to facilitate understanding by those skilled in the art. The accompanying drawings and the following descriptions are provided for those skilled in the art to fully understand this application, and are not intended to limit the subject matter described in the claims.

The "range" disclosed in this application is limited in the form of a lower limit and an upper limit. A given range is limited by selecting a lower limit and an upper limit, which define the boundaries of the specific range. A range defined in this manner may include an end value or may not include an end value, and may be any combination, that is, any lower limit may be combined with any upper limit to form a range. For example, if the ranges of 60-120 and 80-110 are listed for a specific parameter, it is understood that the ranges of 60-110 and 80-120 are also expected. Furthermore, if the smallest range values 1 and 2 are listed, and if the largest range values 3, 4 and 5 are listed, the following ranges may all be expected: 1-3, 1-4, 1-5, 2-3, 2-4, and 2-5. In this application, unless otherwise stated, a numerical range "a-b" represents a shorthand representation for a combination of any real numbers between a and b, where both a and b are real numbers. For example, the numerical range of "0-5" represents that all real numbers between "0-5" have been listed herein, and "0-5" is only a shortened representation of these numerical combinations. In addition, when a parameter is expressed as an integer ≥ 2, it is equivalent to disclosing that the parameter is an integer such as 2, 3, 4, 5, 6, 7, 8, 9, 10, 11, or 12.

Unless otherwise specified, all embodiments and optional embodiments of the present application may be combined with each other to form new technical solutions, and it is conceivable that such technical solutions should be included in the disclosure of the present application.

Unless otherwise specified, all technical solutions and optional technical solutions of the present application may be combined with each other to form new technical solutions, and it is conceivable that such technical solutions should be included in the disclosure of the present application.

Unless otherwise specified, all steps in the present application may be performed sequentially or randomly, preferably sequentially. For example, the method includes steps (a) and (b), meaning that the method may include steps (a) and (b) performed sequentially or steps (b) and (a) performed sequentially. For example, the mentioned method may further include step (c), meaning that step (c) may be added to the method in any order, e.g. the method may include steps (a), (b) and (c), or steps (a), (c) and (b), or steps (c), (a) and (b), etc.

Unless otherwise specified, the terms "including" and "containing" as used herein are meant to be open or closed. For example, the "including" and "containing" may mean that other components not listed may be further included or contained, or only the listed components may be included or contained.

In this application, the term "or" is inclusive, unless specifically stated otherwise. For example, the phrase "A or B" means "A, B, or both A and B". More specifically, either of the following conditions satisfies the condition "A or B": A is true (or present) and B is false (or absent); A is false (or absent) and B is true (or present); or both A and B are true (or present).

Unless otherwise specified, the terms used in the present application have the meanings commonly understood by those skilled in the art.

Unless otherwise specified, the numerical values of each parameter mentioned in the present application may be measured by various test methods commonly used in the art, for example, they may be measured according to test methods provided in the embodiments of the present application.

Unless otherwise specified, in the present application, the term "active ions" refers to ions that can be intercalated and deintercalated back and forth between a positive electrode and a negative electrode of the secondary battery, including but not limited to lithium ions.

In the present application, the terms "a plurality of" and "various" mean two or more.

Secondary batteries are prone to fire and explosion when subjected to abnormal circumstances such as extrusion, collision or puncture, thereby causing serious harm. Research results show that the secondary battery has an internal short circuit when subjected to abnormal circumstances such as extrusion, collision or puncture, which causes severe heat generation, which is the root of safety hazards such as battery fire and explosion. In the prior art, the sheet resistance of the current collector is usually controlled within a certain range to reduce the probability of instantaneous internal short circuit of the secondary battery when a safety hazard occurs. In order to keep the sheet resistance of the current collector within a certain range, it is necessary to strictly control the thickness and accuracy of the conductive metal in the current collector, which makes the cost of the current collector always high.

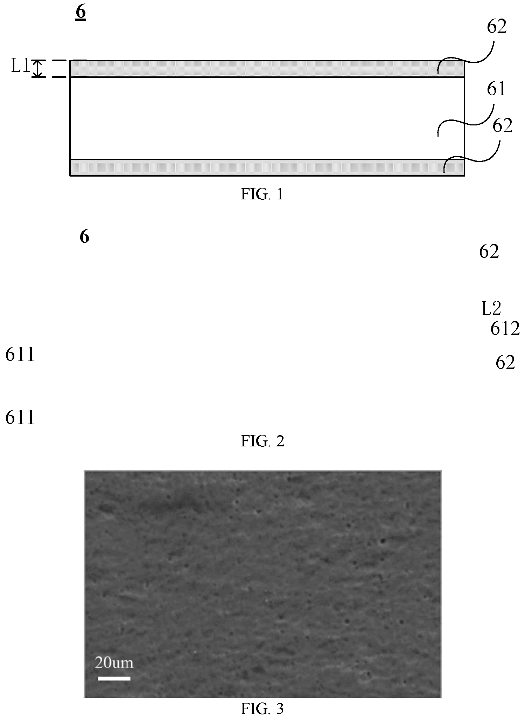

Based on this, as shown in FIG. 1, the present application provides a composite current collector 6. The composite current collector 6 includes a current collector substrate 61 and a metal oxide film 62 disposed on at least one side of the current collector substrate 61, where the metal oxide film 62 has a thickness L1 of 0.5 micrometers (µm) to 2 µm.

Herein, the "metal oxide film" refers to a film layer mainly composed of a metal oxide.

Herein, the "current collector substrate" refers to a main component for collecting the current during discharging or charging of a secondary battery. In some embodiments, the metal oxide film 62 is disposed on one surface of the current collector substrate 61.

In some embodiments, the metal oxide films 62 are disposed on two opposite surfaces of the current collector substrate 61.

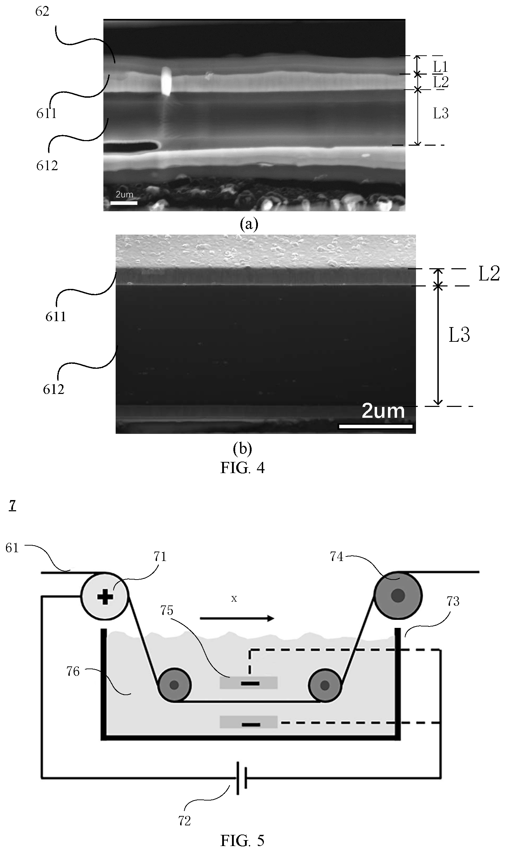

The thickness of the metal oxide film 62 may be tested by a known method in the art, for example, as shown in FIG. 4a, the composite current collector is polished by an argon ion polishing technology to obtain a flat polished cross section of the composite current collector, the cross section of the composite current collector is tested by scanning electron microscope, and the thickness L1 of the metal oxide film is measured by software.

In some embodiments, the thickness L1 of the metal oxide film 62 is 0.5 µm, 0.6 µm, 0.7 µm, 0.8 µm, 0.9 µm, 1.0 µm, 1.1 µm, 1.2 µm, 1.3 µm, 1.4 µm, 1.5 µm, 1.6 µm, 1.7 µm, 1.8 µm, 1.9 µm, and 2.0 µm, or within a numerical range between any two of them. It is generally believed that the naturally generated metal oxide film is less than 0.5 µm in thickness.

In the prior art, it is often considered that the deposition of a metal oxide film on one side of a current collector substrate is not conducive to the electrochemical performance of the current collector substrate in a battery. The present application overcomes the technical bias in the prior art, and effectively controls the sheet resistance of the composite current collector 6 within a certain range by depositing the metal oxide film 62 with a certain thickness on at least one side of the current collector substrate 61, thereby improving the short circuit resistance when a short circuit occurs in the battery under abnormal circumferences, greatly reducing the short circuit current, reducing the heat released due to the short circuit in the battery, reducing the risk of thermal runaway, and greatly improving the safety performance of the battery. Compared with the current collector in the prior art, the composite current collector enables the current collector substrate with poor precision and large deviation of sheet resistance to be applied to manufacturing of the batteries, which greatly reduces the threshold of the current collector substrate that may be used in the battery, and significantly reduces the production cost of the battery.

In some embodiments, the range of the thickness L1 of the metal oxide film 62 is less than or equal to 400 nanometers (nm).

The range of the thickness of the metal oxide film refers to the larger one of a difference between the maximum thickness of the metal oxide film and the average thickness of the metal oxide film and a difference between the average thickness of the metal oxide film and the minimum thickness of the metal oxide film.

The range of the thickness of the metal oxide film may be tested by any known method in the art. As an example, the composite current collector is polished by the argon ion polishing technology to obtain a flat polished cross section of the composite current collector, the cross section of the composite current collector is tested by scanning electron microscope, the thickness of the metal oxide film is measured by software, at least five different samples are taken, at least 10 points are taken from each sample, the average value of the thickness of the metal oxide film is calculated, and the larger one of the difference between the maximum thickness of the metal oxide film and the average value of the thickness of the metal oxide film or the difference between the average value of the thickness of the metal oxide film and the minimum thickness of the metal oxide film is taken as the range of the thickness of the metal oxide film.

In some embodiments, the range of the thickness L1 of the metal oxide film is 10 nm, 50 nm, 100 nm, 150 nm, 200 nm, 250 nm, 300 nm, 350 nm, 400 nm, or a numerical range between any two of them.

The metal oxide film provided in the embodiments of the present application has good film thickness uniformity, which is beneficial to improving the uniformity and consistency of the composite current collector and improving electrochemical performance thereof in the battery.

In some embodiments, as shown in FIG. 2, the current collector substrate 61 includes a support layer 612 and metal conductive layers 611 disposed on two opposite surfaces of the support layer 612.

In some embodiments, the metal conductive layer 611 includes at least one of aluminum, copper, titanium, silver, nickel, an aluminum alloy, a nickel alloy, a titanium alloy, and a silver alloy.

In some embodiments, the nickel alloy may be a nickel-iron alloy or a nickel-copper alloy.

In some embodiments, the metal conductive layer 611 includes a composite material of any one of a metal or an alloy and a two-dimensional material.

In some embodiments, the two-dimensional material includes at least one of a graphene material, a graphene-like material, or a carbon fiber material.

In some embodiments, the composite material may be a physical mixture of different materials in a single layer, or may be a composite structure in which a plurality of layers are stacked.

Herein, the "graphene material" refers to an allotrope of carbon, in which carbon atoms are bonded in sp² hybridization to form a single layer of hexagonal honeycomb lattice graphene.

Herein, the "graphene-like material" refers to a general term for materials having a two-dimensional single-layer or few-layer structure, including but not limited to layered van der Waals solid materials, layered ionic solid materials, graphene materials of the IV main group, IV main group compounds, and III-V main group compounds. Herein, the "carbon fiber material" refers to a high-strength and high-modulus fiber having a carbon content of 90% or more.

In some embodiments, the metal conductive layer 611 includes at least one of aluminum and an aluminum alloy.

In some embodiments, the metal conductive layer 611 is prepared by at least one of mechanical rolling, bonding, vapor deposition, and electroless plating, and the vapor deposition includes at least one of vacuum evaporation, thermal evaporation, electron beam evaporation, and magnetron sputtering.

In some embodiments, the metal conductive layer 611 is prepared by a mechanical rolling method.

The metal conductive layer prepared by the mechanical rolling method tends to have a relatively large thickness and a large deviation value, such that the sheet resistance of the current collector substrate is relatively small and the sheet resistance measured at different positions has a large deviation, and by disposing the metal oxide film on at least one side of the metal conductive layer, the composite current collector has suitable sheet resistance, which can significantly improve the safety of the battery and reduce the manufacturing cost of the battery.

In some embodiments, as shown in FIG. 2 and FIG. 4a, the metal conductive layer 611 has a thickness L2 of 0.8 µm to 2 µm.

In some embodiments, the thickness L2 of the metal conductive layer 611 is optionally 0.8 µm, 1 µm, 1.2 µm, 1.4 µm, 1.6 µm, 1.8 µm, 2 µm, or within a numerical range between any two of them.

The thickness L2 of the metal conductive layer may be tested by a method known in the art, for example, the composite current collector is polished by the argon ion polishing technology to obtain a flat polished cross section of the composite current collector, the cross section of the composite current collector is tested by scanning electron microscope, and the thickness of the metal conductive layer is measured by software.

The metal conductive layer has a conductive property and is configured to provide electrons for an electrode active material layer loaded on the composite current collector, thereby playing a role of conducting and collecting currents. In the prior art, the sheet resistance of the current collector is usually controlled by limiting the thickness of the metal conductive layer, and in the embodiments of the present application, the sheet resistance of the composite current collector is adjusted by the metal oxide film, such that the composite current collector may have a higher thickness of the metal conductive layer, the formation path of a metal conductive layer is widened, the manufacturing cost of the composite current collector is reduced, and the significant reduction of the cost of the battery is effectively achieved.

In some embodiments, the range of the thickness L2 of the metal conductive layer 611 is less than or equal to 0.6 µm.

The range of the thickness of the metal conductive layer refers to the larger one of a difference between the maximum thickness of the metal conductive layer and the average thickness of the metal conductive layer and a difference between the average thickness of the metal conductive layer and the minimum thickness of the metal conductive layer.

In some embodiments, the range of the thickness L2 of the metal conductive layer 611 is optionally 0.1 µ m, 0.2 µ m, 0.3 µ m, 0.4 µ m, 0.5 µ m, 0.6 µ m, or within a numerical range between any two of them.

The range of the thickness L2 of the metal conductive layer may be tested by any known method in the art. As an example, the composite current collector is polished by the argon ion polishing technology to obtain a flat polished cross section of the composite current collector, the cross section of the composite current collector is tested by the scanning electron microscope, the thickness of the metal conductive layer is measured by software, at least five different samples are taken, at least 10 points are taken from each sample, the average value of the thickness of the metal conductive layer is calculated, and the larger one of the difference between the maximum thickness of the metal conductive layer and the average value of the thickness of the metal conductive layer or the difference between the average value of the thickness of the metal conductive layer and the minimum thickness of the metal conductive layer is taken as the range of the thickness of the metal conductive layer.

FIG. 4 (b) shows a current collector in the prior art, which only includes a support layer 612 and metal conductive layers 611 disposed on two surfaces of the support layer 612. It can be seen from the comparison between FIG. 4 (a) and FIG. 4 (b) that, the composite current collector provided in the embodiments of the present application is different from the composite current collector in the prior art, and the overall sheet resistance is adjusted by disposing the metal oxide film, which can be compatible with the metal conductive layer 611 with a large thickness deviation, and greatly expands the production method of the metal conductive layer 611, so that the manufacturing cost of the composite current collector is significantly reduced, and the cost of the battery is further reduced.

In some embodiments, the support layer 612 is an insulating layer.

In some embodiments, the support layer 612 is a metal layer or an alloy layer.

In some embodiments, a thickness L3 of the insulating layer is 4 µm to 8 µm.

In some embodiments, the thickness L3 of the insulating layer is optionally 4 µm, 5 µm, 6 µm, 7 µm, and 8 µm, or within a numerical range between any two of them.

In some embodiments, the insulating layer includes an intermediate layer and bonding layers disposed on both sides of the intermediate layer.

The bonding layer facilitates bonding and mechanical compounding of the conductive layer and the intermediate layer, and further reduces the production cost.

In some embodiments, the insulating layer includes a polymer.

In some embodiments, the polymer includes at least one of polyamide, polyterephthalate, polyimide, polyethylene, polypropylene, polystyrene, polyvinyl chloride, an acrylonitrile-butadienestyrene copolymer, polybutylene terephthalate, poly-p-phenylene terephthalamide, polypropylene, polyoxymethylene, epoxy resin, phenolic resin, polytetrafluoroethylene, polyvinylidene fluoride, silicone rubber or polycarbonate.

In some embodiments, the insulating layer further includes an inorganic filler.

In some embodiments, the inorganic filler includes at least one of aluminum oxide, silicon carbide, silicon dioxide, or glass fibers.

When the insulating layer is short-circuited under abnormal circumstances of the battery, it will be fused, such that no current is further conducted, the short circuit current is greatly reduced, and the heat released and the temperature rise amplitude are reduced under abnormal circumstances, which finally reduces the risk of cell burning and thermal runaway, and greatly improves the safety performance of the battery. Meanwhile, the insulating layer is beneficial to the improvement of the elongation at break of the composite current collector, and may compensate for the negative impact of the metal oxide film on the processability of the composite current collector, thereby meeting the requirements of the battery on the processing performance of the current collector.

In some embodiments, the metal oxide film 62 includes aluminum oxide or copper oxide.

In some embodiments, the metal oxide film 62 includes aluminum oxide.

The surface of the metal oxide film may be tested by the scanning electron microscope, as shown in FIG. 3. The aluminum oxide film is non-conductive, and has high compactness, chemical stability and thermal stability, which may stably improve the sheet resistance of the composite current collector within the cycle life of the battery, and improve the safety performance of the battery.

In some embodiments, as shown in FIG. 1, under normal temperature conditions, the sheet resistance of the composite current collector 6 on one side of the metal oxide film 62 is 25 milliohms per square (m Ω/□) to 35 mΩ/□.

Herein, the "normal temperature" refers to 20±10 degrees Celsius (°C).

Herein, the "sheet resistance" refers to a voltage drop generated by the current density per unit area (i.e., the amount of current per unit area) in a thickness direction of a material at a certain temperature.

For a conventional three-dimensional conductor, a formula for calculating the resistance is as follows: $R = ρ \frac{L}{A}$
where ρ represents resistivity, A represents a cross-sectional area, and L represents a length. The cross-sectional area may be decomposed into a width W and a film thickness t, i.e., the resistance may be denoted as follows: $R = \frac{ρ}{t} \frac{L}{W} = {R}_{s} \frac{L}{W}$
where Rs is the sheet resistance. When the film is square in shape, L=W, the measured resistance R is the sheet resistance R_{S}, and R_{S} is independent of a magnitude of L or W, R_{S} is the resistance value per square, so the unit of R_{S} may be expressed as ohms per square (Ω/□).

The sheet resistance of the composite current collector on one side of the metal oxide film may be tested by a method known in the art, for example, under room temperature conditions, a four terminal probe test instrument is used, four clean copper probes A, B, C, and D with diameters of 2.0 millimeters (mm) are sequentially pressed in parallel on the metal oxide film of the composite current collector in a length direction of the composite current collector, a wire is welded to the top of the copper rod and connected to a milliohm meter, such that a distance L between a copper rod B and a copper rod C is equal to the width W of the composite current collector, the distance between a copper rod A and a copper rod B, and the distance between a copper rod C and a copper rod D are not specifically limited, and may be 10 mm to 20 mm, and after the milliohm meter is connected, the resistance value displayed by the milliohm meter is the sheet resistance value of the composite current collector on one side of the metal oxide film.

In some embodiments, under room temperature conditions, the sheet resistance of the composite current collector on the metal oxide film side is 25 m Ω/□, 26 m Ω/□, 27 m Ω/□, 28 m Ω/□, 29 m Ω/□, 30 m Ω/□, 31 m Ω/□, 32 m Ω/□, 33 m Ω/□, 34 m Ω/□, 35 m Ω/□, or within a numerical range between any two of them.

The composite current collector having the above sheet resistance can improve the short circuit resistance of the battery when a short circuit occurs under abnormal circumstances, greatly reduce the short circuit current, reduce the heat released due to the internal short circuit of the battery, reduce the risk of thermal runaway, and greatly improve the safety performance of the battery.

In some embodiments, the composite current collector has an elongation at break of 15% to 30%.

Herein, the term "elongation at break" refers to a ratio of a length change of a material after being subjected to a force and plastically deformed until breaking to an original length, which is usually expressed as a percentage, and is an important parameter for measuring the deformation ability of the material subjected to stress during the stretching process.

In the present application, the elongation at break of the composite current collector may be tested by a method known in the art, for example, referring to the GB/T 5230-1995 standard, at least four samples with a length of 200±0.5 mm and a width of 15±0.25 mm are cut out, and the samples are continuously loaded at a tensile speed of 50 millimeters per minute (mm/min) at room temperature until the samples are broken, and the maximum load divided by the cross-sectional area of the sample is taken as the tensile strength of the sample.

In some embodiments, the elongation at break of the composite current collector is optionally 15%, 20%, 25%, 30%, or within a numerical range between any two of them.

When the elongation at break of the composite current collector is within the above range, the composite current collector has good plasticity at the same time, which can reduce the probability of brittle fracture of the electrode sheet and further improve the safety of the battery.

A second aspect of the present application provides a preparation method for a composite current collector, including: a current collector substrate is provided; and a metal oxide film is prepared on at least one side of the current collector substrate by an anodic oxidation method to obtain a composite current collector, where the metal oxide film has a thickness of 0.5 µm to 2 µm.

In the present disclosure, the term "anodic oxidation method" refers to a process in which a metal oxide film is formed on the surface of a metal or an alloy thereof under the action of an external current in an electrolyte and under specific process conditions.

By adopting an anodic oxidation method, a current collector substrate is used as an anode, and a metal oxide film with a certain thickness is generated on a surface of the current collector substrate through an electrochemical reaction to obtain a composite current collector, and the composite current collector has certain sheet resistance, such that when a short circuit occurs inside the battery under abnormal circumstances, the short circuit current is greatly reduced, heat released due to the short circuit is reduced, the risk of thermal runaway is reduced, and the safety performance of the battery is greatly improved. Compared with the current collector in the prior art, the composite current collector enables the current collector substrate with poor precision and large deviation of sheet resistance to be applied to manufacturing of the batteries, which greatly reduces the threshold of the current collector substrate that may be used in the battery, and significantly reduces the production cost of the battery. Moreover, the oxide film generated by the anodic oxidation method has a high degree of compactness and good thickness uniformity, which is beneficial to improving the uniformity and consistency of the composite current collector.

In any embodiment, a range of the thickness of the metal oxide film is less than or equal to 400 nm.

In some embodiments, under normal temperature conditions, sheet resistance of the composite current collector on one side of the metal oxide film is 25m Ω/□ to 35 m Ω/□.

In some embodiments, an electrolyte of the anodic oxidation method is an acidic electrolyte, the acidic electrolyte includes at least one of sulfuric acid, hypochlorous acid, and hypochlorite, and a mass percentage concentration of the acidic electrolyte is 10% to 40%.

In some embodiments, the acidic electrolyte includes sulfuric acid.

In some embodiments, the mass percentage concentration of the acidic electrolyte is 10%, 15%, 20%, 25%, 30%, 35%, and 40%, or within a numerical range between any two of them.

The mass percentage concentration refers to the percentage of the mass of a solute contained in a solution to the mass of the solution. When the concentration of the acidic electrolyte is within the above range, it is beneficial to generating the metal oxide film on the surface of the current collector substrate, which can not only improve the preparation efficiency of the metal oxide film, but also avoid the rapid decomposition of the metal oxide film due to the too high concentration of the acidic electrolyte, thereby achieving the stable and efficient preparation of the metal oxide film.

In some embodiments, a temperature of the electrolyte is 0°C to 40°C.

In some embodiments, the temperature of the electrolyte is 0°C, 5°C, 10°C, 15°C, 20°C, 25°C, 30°C, 35°C, and 40°C, or within a numerical range between any two of them.

When the temperature of the electrolyte is within the above range, acid corrosion is less likely to occur, and the electrochemical reaction efficiency of anodic oxidation can be improved, such that a metal oxide film may be stably and efficiently prepared.

In some embodiments, a voltage of the anodic oxidation method is 5 volts (V) to 25 V.

In some embodiments, a voltage of the anodic oxidation method is 5V, 9V, 13V, 17V, 21V, 25V, or within a numerical range between any two of them.

When the voltage of the anodic oxidation method is within the above range, the surface of the current collector substrate is not ablated due to an excessively high oxidation voltage, and the oxide film is not generated due to an excessively low oxidation voltage, thereby achieving stable and efficient deposition of the metal oxide film.

In some embodiments, the preparation method is a continuous production method.

In some embodiments, the continuous production method uses a continuous line to enable the current collector substrate to be continuously anodized. The preparation efficiency of the composite current collector is improved by the above method, which is beneficial to industrial popularization and application.

In some embodiments, the continuous production method uses a continuous electroplating device. In some embodiments, as shown in FIG. 5, the electroplating device 7 includes conductive rollers 71, an external power supply 72, an electrolytic cell 73, a passing roller 74, a cathode plate 75, and an electrolytic solution 76 contained in the electrolytic cell. The cathode plate 75 is immersed in the electrolytic solution 76 so as to face the surface of the current collector substrate 61.

In some embodiments, the conductive rollers 71 are respectively disposed on two opposite surfaces of the current collector substrate 61, such that both surfaces of the current collector substrate 61 can be positively charged.

In some embodiments, the continuous production method includes: the conductive rollers 71 of the electroplating device 7 are connected to a positive electrode of the external power supply 72, and the cathode plate 75 is connected to a negative electrode of the external power supply 72; the current collector substrate 61 is transported to an electrolytic cell 73 loaded with an electrolyte 76 through the conductive rollers 71 for anodic oxidation, and then is removed from the electrolytic cell 73 through the passing roller 74.

In some embodiments, the cathode plate is at least one of a copper plate and a lead plate.

In some embodiments, the conductive rollers are metal rollers, optionally stainless steel rollers.

In some embodiments, the electroplating device includes at least two cathode plates, and the at least two cathode plates are disposed opposite to two opposite surfaces of the current collector substrate.

This arrangement enables the upper and lower surfaces of the current collector substrate to be anodized at the same time to form a metal oxide film when the current collector substrate is transported in the electrolytic cell, thereby improving the production efficiency.

### Electrode sheet

A third aspect of the embodiments of the present application provides an electrode sheet, where the electrode sheet includes a current collector, and the current collector includes the composite current collector in any embodiment or the composite current collector prepared by using the preparation method in any embodiment.

In some embodiments, the electrode sheet is a positive electrode sheet, and the current collector is a composite current collector.

In some embodiments, the positive electrode sheet includes the composite current collector and a positive electrode film layer disposed on at least one surface of the composite current collector. For example, the composite current collector has two surfaces opposite in its own thickness direction, and the positive electrode film layer is disposed on either one or both of the two opposite surfaces of the composite current collector.

The positive electrode film layer generally includes a positive electrode active material, an optional binder and an optional conductive agent. The positive electrode film layer is generally formed by applying a positive electrode slurry on the metal oxide film of the composite current collector, followed by drying and cold pressing. The positive electrode slurry is generally formed by dispersing a positive electrode active material, an optional conductive agent, an optional binder, and any other component in a solvent and stirring them uniformly. The solvent may be N-methylpyrrolidone (NMP), but is not limited thereto. As an example, the binder used for the positive electrode film layer may include one or a plurality of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, or fluorine-containing acrylate resin. As an example, the conductive agent used for the positive electrode film layer includes one or a plurality of superconducting carbon, conductive graphite, acetylene black, carbon black, ketjen black, carbon dot, carbon nanotube, graphene, or carbon nanofiber.

The positive electrode active material may be a positive electrode active material used for a secondary battery well-known in the art.

When the secondary battery in the present application is a lithium-ion battery, the positive electrode active material may include, but is not limited to, one or more of lithium-containing transition metal oxide, lithium-containing phosphate, or respective modified compounds thereof. Examples of the lithium transition metal oxide may include, but are not limited to, one or a plurality of a lithium cobalt oxide, a lithium nickel oxide, a lithium manganese oxide, a lithium nickel cobalt oxide, a lithium manganese cobalt oxide, a lithium nickel manganese oxide, a lithium nickel cobalt manganese oxide, a lithium nickel cobalt aluminum oxide, or respective modified compounds thereof. Examples of the lithium-containing phosphate may include, but are not limited to, one or a plurality of lithium iron phosphate, a composite material of lithium iron phosphate and carbon, lithium manganese phosphate, a composite material of lithium manganese phosphate and carbon, lithium ferric manganese phosphate, a composite material of lithium ferric manganese phosphate and carbon, or respective modified compounds thereof.

In some embodiments, to further increase the energy density of the secondary battery, the positive electrode active material for a lithium-ion battery may include one or a plurality of lithium transition metal oxide having a general formula of LiₐNi_{b}Co_{c}M_{d}OₑA_{f} or a modified compound thereof. 0.8≤a≤1.2, 0.5≤b<1, 0<c<1, 0<d<1, 1≤e≤2, 0≤f≤1, where M is selected from one or a plurality of Mn, Al, Zr, Zn, Cu, Cr, Mg, Fe, V, Ti, or B, and A is selected from one or a plurality of N, F, S, or Cl.

In some embodiments, as an example, the positive electrode active material used for a lithium ion battery may include one or a plurality of LiCoO₂, LiNiO₂, LiMnO₂, LiMn₂O₄, LiNi_{1/3}Co_{1/3}Mn_{1/3}O₂ (NCM333), LiNi_{0.5}Co_{0.2}Mn_{0.3}O₂ (NCM523), LiNi_{0.6}Co_{0.2}Mn_{0.2}O₂ (NCM622), LiNi_{0.8}Co_{0.1}Mn_{0.1}O₂ (NCM811), LiNi_{0.85}Co_{0.15}Al_{0.05}O₂, LiFePO₄, or LiMnPO₄.

In the present application, the modified compound of each of the aforementioned positive electrode active materials may be a compound of the positive electrode active material subjected to doping modification and/or surface coating modification.

In some embodiments, the electrode sheet is a negative electrode sheet, and the current collector is a composite current collector.

In some embodiments, the negative electrode sheet includes a composite current collector and a negative electrode film layer disposed on at least one surface of the composite current collector. For example, the composite current collector has two surfaces opposite in its thickness direction, and the negative electrode film layer is disposed on either one or both of the two opposite surfaces of the composite current collector.

In some embodiments, the negative electrode film layer includes a negative electrode active material. In some embodiments, the other negative electrode active materials include, but are not limited to, one or a plurality of conventional natural graphite, synthetic graphite, soft carbon, hard carbon, a silicon-based material, a tin-based material, and lithium titanate. The silicon-based material may include one or a plurality of elemental silicon, silicon oxide, a silicon-carbon composite, a silicon-nitrogen composite, or a silicon alloy material. The tin-based material may include one or a plurality of elemental tin, tin oxide, or a tin alloy material.

In some embodiments, the negative electrode film layer optionally further includes a negative electrode conductive agent. The type of the negative electrode conductive agent is not particularly limited in the present application. As an example, the negative electrode conductive agent may include one or more of superconducting carbon, conductive graphite, acetylene black, carbon black, ketjen black, carbon dot, carbon nanotube, graphene, or carbon nanofiber.

In some embodiments, the negative electrode film layer optionally further includes a negative electrode binder. The type of the negative electrode binder is not particularly limited in the present application. As an example, the negative electrode binder may include one or more of styrenebutadiene rubber (SBR), aqueous unsaturated resin SR-1B, aqueous acrylic resin (for example, polyacrylic acid (PAA), polymethacrylic acid (PMAA), and sodium polyacrylate (PAAS)), polyacrylamide (PAM), polyvinyl alcohol (PVA), sodium alginate (SA), or carboxymethyl chitosan (CMCS).

In some embodiments, the negative electrode film layer optionally further includes other auxiliary agents. As an example, other auxiliary agents may include a thickening agent, such as sodium carboxymethyl cellulose (CMC) and a PTC thermistor material.

The negative electrode film layer is generally formed by applying a negative electrode slurry to the metal oxide film of the composite current collector, followed by drying and cold pressing. The negative electrode slurry is generally formed by dispersing a negative electrode active material, an optional conductive agent, an optional binder, and other optional auxiliary agents in a solvent and stirring them uniformly. The solvent may be N-methylpyrrolidone (NMP) or de-ionized water, but is not limited thereto.

The negative electrode sheet does not exclude other additional functional layers in addition to the negative electrode film layer. For example, in some embodiments, the negative electrode sheet of the present application further includes a conductive undercoat (for example, composed of a conductive agent and a binder) sandwiched between the composite current collector and the negative electrode active material layer and disposed on the surface of the composite current collector. In some embodiments, the negative electrode sheet in the present application further includes a protective layer covering the surface of the negative electrode film layer.

### Secondary battery

A fourth aspect of the embodiments of the present application provides a secondary battery.

The type of the secondary battery is not particularly limited in the present application, for example, the secondary battery may be a lithium-ion battery. Under normal conditions, the secondary battery includes a positive electrode sheet, a negative electrode sheet, an electrolyte, and the like. During charging and discharging of the secondary battery, active ions are intercalated and deintercalated back and forth between the positive electrode sheet and the negative electrode sheet. The electrolyte functions to conduct the active ions between the positive electrode sheet and the negative electrode sheet. The type of the electrolyte is not particularly limited in the present application, and may be selected according to an actual demand. For example, the electrolyte may be selected from at least one of a solid electrolyte or a liquid electrolyte (namely, an electrolyte solution). In secondary batteries using the electrolyte solution and some secondary batteries using the solid electrolyte, a separator may be further included. The separator is disposed between the positive electrode sheet and the negative electrode sheet to function to isolate.

### [Electrolyte]

In some embodiments, the electrolyte is an electrolyte solution including an electrolyte salt and a solvent.

The type of the electrolyte salt is not specifically limited and may be selected according to an actual demand.

When the secondary battery in the present application is a lithium-ion battery, as an example, the electrolyte salt may include one or more of lithium hexafluorophosphate (LiPF₆), lithium tetrafluoroborate (LiBF₄), lithium perchlorate (LiClO₄), lithium hexafluoroarsenate (LiAsF₆), lithium bis(fluorosulfonyl)imide (LiFSI), lithium bis(trifluoromethanesulfonyl)imide (LiTFSI), lithium trifluoromethanesulfonate (LiTFS), lithium difluoro(oxalato)borate (LiDFOB), lithium bis(oxalato)borate (LiBOB), lithium difluorophosphate (LiPO₂F₂), lithium difluorobis(oxalato)phosphate (LiDFOP), or lithium tetrafluoro(oxalato)phosphate (LiTFOP).

The type of the solvent is not specifically limited and may be selected according to an actual demand. In some embodiments, as an example, the solvent may include one or a plurality of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), methyl sulfonyl methane (MSM), ethyl methyl sulfone (EMS), or ethyl sulfonyl ethane (ESE).

In some embodiments, the electrolyte solution optionally further includes an additive. For example, the additive may include a negative electrode film-forming additive or a positive electrode film-forming additive, and may further include an additive capable of improving some performance of a secondary battery, for example, an additive for improving overcharge performance of a secondary battery, an additive for improving high-temperature performance of a secondary battery, an additive for improving low-temperature power performance of a secondary battery, etc.

### [Separator]

The type of the separator is not particularly limited in the present application, and any well-known porous separator with good chemical stability and mechanical stability may be used.

In some embodiments, a material of the separator may include one or a plurality of glass fiber, non-woven fabric, polyethylene, polypropylene, or polyvinylidene fluoride. The separator may be a single-layer film or a multilayer composite film. When the separator is a multilayer composite thin film, materials of all the layers are the same or different.

In some embodiments, the positive electrode sheet, the separator, and the negative electrode sheet may be fabricated into an electrode assembly by a winding process or a lamination process.

In some embodiments, the secondary battery may include an outer package. The outer package may be used to package the foregoing electrode assembly and electrolyte.

In some embodiments, the outer package may be a hard shell, such as a hard plastic shell, an aluminum shell, a steel shell, etc. The outer package may also be a pouch, such as a bag-type pouch. The material of the pouch may be plastic, such as one or more of polypropylene (PP), polybutylene terephthalate (PBT), and polybutylene succinate (PBS).

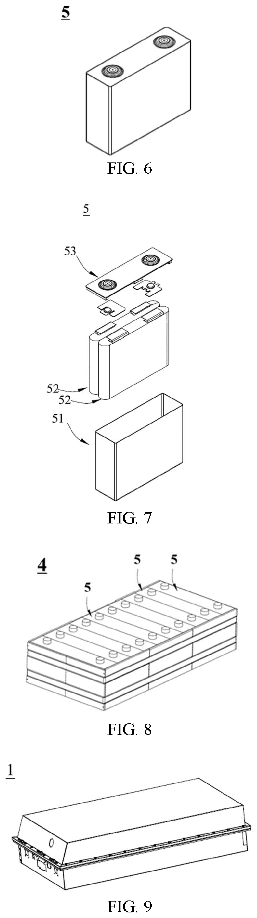

The shape of the secondary battery is not limited in the present application, and may be a cylindrical shape, a square shape, or any other shape. FIG. 6 shows a square secondary battery 5 as an example.

In some embodiments, as shown in FIG. 7, the outer package may include a housing 51 and a cover plate 53. The housing 51 may include a bottom plate and side plates connected to the bottom plate, the bottom plate and the side plates forming an accommodating chamber in an enclosing manner. The housing 51 has an opening communicating with the accommodating chamber, and the cover plate 53 is configured to cover the opening to close the accommodating chamber. The positive electrode sheet, the negative electrode sheet, and the separator may be formed into an electrode assembly 52 through a winding process or a lamination process. The electrode assembly 52 is packaged within the accommodating chamber. The electrolyte solution is impregnated into the electrode assembly 52. There may be one or a plurality of the electrode assemblies 52 contained in the secondary battery 5, and adjustments may be made according to requirements.

A method for manufacturing the secondary battery of the present application is well known. In some embodiments, the positive electrode sheet, the separator, the negative electrode sheet, and the electrolyte solution may be assembled to form the secondary battery. As an example, the positive electrode sheet, the separator, and the negative electrode sheet may be formed into an electrode assembly through a winding process or a lamination process. The electrode assembly may be placed into the outer package, dried, then be injected with an electrolyte solution, and be subject to procedures such as vacuum sealing, resting, formation, and shaping to obtain a secondary battery.

In some embodiments of the present application, the secondary battery according to the present application may be assembled into a battery module. The battery module may contain a plurality of secondary batteries. The specific number may be adjusted according to the application and capacity of the battery module.

FIG. 8 is a schematic view of a battery module 4 as an example. As shown in FIG. 8, in the battery module 4, a plurality of secondary batteries 5 may be arranged sequentially in the length direction of the battery module 4. Certainly, the battery cells may alternatively be arranged in any other manner. Further, the plurality of secondary batteries 5 may be fixed by fasteners.

Optionally, the battery module 4 may further include a housing with an accommodating space. The plurality of secondary batteries 5 are accommodated in the accommodating space.

In some embodiments, the battery modules described above may be assembled into a battery pack, and the number of battery modules included in the battery pack may be adjusted according to the application and capacity of the battery pack.

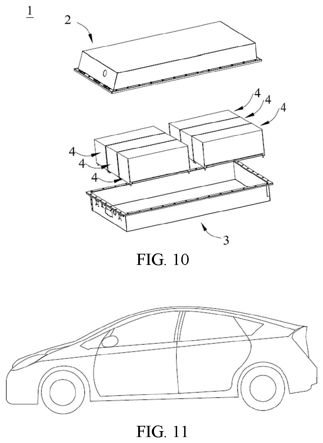

FIG. 9 and FIG. 10 are schematic views of a battery pack 1 as an example. As shown in FIG. 9 and FIG. 10, the battery pack 1 may include a battery case and a plurality of battery modules 4 disposed in the battery case. The battery case includes an upper box body 2 and a lower box body 3. The upper box body 2 is configured to cover the lower box body 3 to form a closed space for accommodating the battery modules 4. The plurality of battery modules 4 may be arranged in any manner in the battery case.

### Electrical device

The present application further provides an electrical device, including at least one of a secondary battery, a battery module, or a battery pack provided by the present application. The secondary battery, the battery module, or the battery pack may be used as a power supply of the electrical device and may also be used as an energy storage unit of the electrical device. The electrical device may include, but is not limited to, mobile equipment (e.g., a cell phone, a tablet computer, or a notebook computer), an electric vehicle (e.g., a battery electric vehicle, a hybrid electric vehicle, a plug-in hybrid electric vehicle, an electric bicycle, an electric scooter, an electric golf cart, or an electric truck), an electric train, ship, or satellite, or an energy storage system.

For the electrical device, the secondary battery, the battery module, or the battery pack may be selected according to a use demand.

FIG. 11 is a schematic view of an electrical device as an example. The electrical device is a pure electric vehicle, a hybrid electric vehicle, a plug-in hybrid electric vehicle, or the like. To satisfy the demands for high power and high energy density of the electrical device, a battery pack or a battery module may be used.

As another example, the electrical device may be a cell phone, a tablet computer, a notebook computer, or the like. This electrical device is generally required to be thin and lightweight, and may use a secondary battery as a power supply.

### Examples

The following examples describe the disclosure of the present application more specifically. These examples are used only for illustration, since various modifications and changes made within the scope of the disclosure of the present application are obvious to those skilled in the art. Unless otherwise stated, all parts, percentages and ratios reported in the following example are on a mass basis. All reagents used in the examples are commercially available or can be synthesized according to conventional methods, and used directly without further processing. The instruments used in the example are commercially available.

### Example 1

### (1) Preparation of a composite current collector

The structure of the current collector substrate was aluminum foil/polyvinyl fluoride/polypropylene/polyvinyl fluoride/aluminum foil, and polyvinyl fluoride / polypropylene/polyvinyl fluoride was used as an insulating layer, where the aluminum foil was deposited by mechanical calendering, the thickness of a single layer thereof was 1±0.2 µm, and the thickness of the insulating layer was 8 µm; the current collector substrate entered an electrolytic cell, passed through conductive rollers, and then entered a tank with an electrolyte, where the electrolyte in the tank included H₂SO₄, the concentration of the electrolyte was 15%, and the temperature of the electrolyte was 28 °C.

The electrolytic cell was connected to an external power supply, a positive electrode power supply was connected to the conductive roller, the conductive rollers were steel rollers, after the current collector substrate passed through the conductive rollers disposed on two opposite surfaces of the current collector, the two opposite surfaces of the current collector substrate were both positively charged, a negative electrode power supply was connected to a cathode plate in the electrolytic cell, the cathode plate was negatively charged, the cathode plate was made of a copper plate, the area of the cathode plate was 0.6m×2m, and a current loop was formed in the entire electrolytic cell; the liquid level of the electrolyte was higher than that of the cathode plate, the cathode plate was entirely immersed in the electrolyte, the current collector substrate passed between the upper and lower cathode plates in the electrolytic cell, the surfaces of the upper and lower cathode plates and the current collector substrate were substantially parallel, the current collector substrate could realize simultaneous anodic oxidation of the upper and lower surfaces during the process of moving in the electrolytic cell, the moving speed was 4 m/min, the anodic oxidation time was 3.0 min, and a metal oxide film was deposited on the current collector substrate to prepare a composite current collector. The thickness of the metal oxide film was 1.10±0.38 µm, and the elongation at break of the composite current collector was 18%.

### (2) Preparation of a battery

A positive electrode active material NCM811, a conductive agent carbon black, and a binder polyvinylidene fluoride (PVDF) were uniformly mixed in an N-methylpyrrolidone (NMP) solvent at a mass ratio of 97%: 1%: 2% to prepare a positive electrode slurry, then the positive electrode slurry was applied to a surface of the composite current collector by using an extrusion coater and dried, and then the applied electrode was subjected to cold pressing by using a cold press to prepare a final positive electrode sheet.

A negative electrode active material artificial graphite, carbon nanotubes, a binder styrenebutadiene rubber (SBR), and a thickener sodium carboxymethyl cellulose (CMC) were fully stirred and mixed in deionized water at a mass ratio of 97.1%: 0.9%: 1.1%: 0.9%: to form a uniform negative electrode slurry; then, the negative electrode slurry was applied to the negative current collector. After processes such as drying and cold pressing, the negative electrode plate could be obtained.

A polyethylene (PE) film was used as a separator.

Ethylene carbonate, ethyl methyl carbonate, and diethyl carbonate were mixed at a volume ratio of 1: 1: 1 to obtain an organic solvent, and sufficiently dried lithium salt LiPF₆ was dissolved in the mixed organic solvent to prepare an electrolyte having a concentration of 1 mol/L.

The positive electrode sheet, the separator, and the negative electrode sheet were wound or stacked in sequence to obtain a bare cell; the bare cell was placed in a packaging shell, dried and then injected with an electrolyte, and subjected to procedures such as vacuum sealing, standing, formation, and shaping to obtain a lithium-ion battery.

### Examples 2-4

The anodization parameters were adjusted, see Table 1 for details. The preparation methods are the substantially same as that in Example 1.

### Comparative Example 1

A secondary battery was prepared by using the current collector substrate before anodization in Example 1 as a positive electrode current collector.

### Performance tests:

### (1) Sheet Resistance Test

At 25 °C, a four terminal probe test instrument was used, four round copper rod probe A, B, C, and D were sequentially pressed in parallel on the metal oxide film of the composite current collector in the length direction of the composite current collector, the diameters of the probes were 2.00 mm, a wire was welded on the top of the copper rod and connected to a milliohm meter, such that the distance L between the copper rod B and the copper rod C was equal to the width W of the composite current collector, the distance between the copper rod A and the copper rod B, and the distance between the copper rod C and the copper rod D were not specifically limited, and might be 10 mm to 20 mm, and after the milliohm meter was connected, the resistance value displayed by the milliohm meter was the sheet resistance value of the composite current collector on one side of the metal oxide film.

### (2) Thickness Test

The composite current collector obtained after the anodization was prepared, a flat polished cross section was obtained by a cross section polishing technology, the cross section of the composite current collector was tested by the scanning electron microscope, and the thickness of the metal oxide film was measured.

### (3) Needle Sticking Test

After the battery was fully charged, a 1 mm high-temperature resistant steel needle was inserted into the battery at a speed of 0.1 mm/s and a depth of 4 mm from a direction perpendicular to the battery electrode sheet, the insertion position was preferably close to the geometric center of the surface to be inserted, and the steel needle was left in the battery and left for 1 hour to observe a battery fire.

### Test results

The test results of the above Examples and Comparative Examples are shown in Table 1 below.

**Table 1**

| No. | Anodization | | Composite current collector | | Battery |
|---|---|---|---|---|---|
| | Voltage | Time | Thickness of metal oxide film (µm) | Sheet resistance m Ω/□ | Needle sticking test |
| Example 1 | 8V | 3min | 1.10 | 29.76 | No fire |
| Example 2 | 8V | 3.5 min | 1.27 | 30.68 | No fire |
| Example 3 | 8V | 4 min | 1.67 | 34.34 | No fire |
| Example 4 | 8V | 2 min | 0.63 | 25.13 | No fire |
| Comparative Example 1 | \ | \ | \ | 21.38 | Fire |

It can be seen from the comparison between the examples and the comparative examples that the composite current collector provided by the examples of the present application includes a current collector substrate and a metal oxide film disposed on at least one side of the current collector substrate, where the metal oxide film has a thickness of 0.5 µm to 2 µm. Under normal temperature conditions, the sheet resistance of the composite current collector at normal temperature is 25m Ω/□ to 35m Ω/□, and the composite current collector has high sheet resistance and does not ignite after 1 hour of a needle sticking test, which is beneficial to improving the safety performance of the battery.

It should be noted that the present application is not limited to the above-described implementation. The above-described implementation is merely an example, and any implementation having substantially the same configuration as the technical concept and exhibiting the same operation and effect within the scope of the claims of the present application is included in the technical scope of the present application. Furthermore, without departing from the gist of the present application, various modifications that can be conceived by those skilled in the art to the embodiments, and other modes constructed by combining some constituent elements of the embodiments, are also included within the scope of the present application.

## Claims

1. A composite current collector, comprising a current collector substrate and a metal oxide film disposed on at least one side of the current collector substrate, wherein the metal oxide film has a thickness of 0.5 µm to 2 µm.

2. The composite current collector according to claim 1, wherein a range of the thickness of the metal oxide film is less than or equal to 400 nm.

3. The composite current collector according to any one of claim 1 or 2, wherein the current collector substrate comprises a support layer and metal conductive layers disposed on two opposite surfaces of the support layer; and the current collector substrate comprises one or more of the following features:
(1) the support layer being an insulating layer, and the metal conductive layers being disposed on two opposite surfaces of the insulating layer; and
(2) the support layer being a metal layer or an alloy layer, and the metal conductive layers being disposed on two opposite surfaces of the metal layer or the alloy layer.

4. The composite current collector according to claim 3, wherein each of the metal conductive layers comprises one or more of the following features:
(1) each of the metal conductive layers comprising at least one of aluminum, copper, titanium, silver, nickel, an aluminum alloy, a nickel alloy, a titanium alloy, and a silver alloy; and
(2) each of the metal conductive layers comprising a composite material of any one of metal or an alloy and a two-dimensional material; and the two-dimensional material comprises at least one of a graphene material, a graphene-like material, or a carbon fiber material.

5. The composite current collector according to claim 3 or 4, wherein
the metal conductive layers have a thickness of 0.8 µm to 2 µm.

6. The composite current collector according to any one of claims 3 to 5, wherein
a range of the thickness of the metal conductive layers is less than or equal to 0.6 µ m.

7. The composite current collector according to any one of claims 3 to 6, wherein
the insulating layer comprises a polymer.

8. The composite current collector according to any one of claims 1 to 7, wherein
the metal oxide film comprises aluminum oxide or copper oxide.

9. The composite current collector according to any one of claims 1 to 8, wherein under a normal temperature condition, sheet resistance of the composite current collector on one side of the metal oxide film is 25 m Ω/□ to 35 mΩ/□.

10. A preparation method for a composite current collector, comprising:
providing a current collector substrate; and
preparing a metal oxide film on at least one side of the current collector substrate by an anodic oxidation method to obtain a composite current collector, wherein the metal oxide film has a thickness of 0.5 µm to 2 µm.

11. The preparation method according to claim 10, wherein a range of the thickness of the metal oxide film is less than or equal to 400 nm.

12. The preparation method according to claim 11, wherein an electrolyte in the anodic oxidation method is an acidic electrolyte, the acidic electrolyte comprises at least one of sulfuric acid, hypochlorous acid, and hypochlorite, and a mass percentage concentration of the acidic electrolyte is 10% to 40%.

13. The preparation method according to claim 12, wherein a temperature of the electrolyte is 0°C to 40°C.

14. The preparation method according to any one of claims 10 to 13, wherein a voltage in the anodic oxidation method is 5V to 25V.

15. The preparation method according to any one of claims 10 to 14, wherein the preparation method is a continuous production method.

16. The preparation method according to any one of claims 10 to 15, wherein under a normal temperature condition, sheet resistance of the composite current collector on one side of the metal oxide film is 25 mΩ/□ to 35 mΩ/□.

17. An electrode sheet, comprising a current collector, wherein the current collector comprises the composite current collector according to any one of claims 1 to 9 or the composite current collector according to any one of claims 10 to 16.

18. A secondary battery, comprising the electrode sheet according to claim 17.

19. An electrical device, comprising the secondary battery according to claim 18.
